# EUROPEAN PATENT APPLICATION

(11) **EP 0 827 321 A2**
(43) Date of publication of application: **04.03.1998**
(21) Application number: 97830423.6
(22) Date of filing: 14.08.1997
(51) Int. Cl.: H04M 3/50

(54) **Device and system for phonic advertising on telephone terminals**

(30) Priority: 20.08.1996 IT RM960585
(71) Applicant: Zerosei s.r.l., 00128 Roma (IT)
(72) Inventor: Meli,Salvatore, 00128 Roma (IT)
(74) Representative: Fiammenghi-Domenighetti, Delfina

(57) **Abstract**

When a telephone call directed to a private or public telephone exchange through telephone cables, coaxial cables, optical fibres, radio links or satellite connections, including server telephone exchanges of mobile telephone receivers, is waiting for the answer, it is arranged that on the line concerned by this telephone call, an apparatus for the reproduction and selection of sale promotion messages is activated; wherein said apparatus forms an independent and complementary unit with respect to the telephone exchange. This apparatus realizes the synchronization of advertising messages according to the waiting times of the user. An intelligent code associated to each storage medium of the advertising messages allows a excellent management thereof.

## Description

The present invention generally relates to the management of informative services of the vocal type in the context of telephone communications and more particularly it relates to a management technique for phonic advertising on telephone terminals, both public and private.

A number of most different users of the telephone service, both of medium and large size, public or private, makes more and more use of musical passage reproduction devices, which are operated when the calling user is waiting for the answer from the called user, who cannot answer temporarily or is absent.

Usually the repetition of the same musical passage, interrupted by apologies and invitations to wait until the called person is free, and their prolongation in time, annoys the calling user even when the telephone call is made only once, and it annoys him still more when a particular telephone number is dialled rather frequently. On the other hand, it is also true that during the whole time in which such musical passages are transmitted, the line is engaged and is not really used for the telephone conversation, and this time is accounted by the telephone service company. Therefore, besides the time wasted by the calling user who must wait and hear musical passages which are both uninteresting and tedious, there is also the economic loss of being forced to pay for the useless waiting.

The object of the present invention is to provide a system for a phonic advertising service on telephone terminals, which allows in a versatile way the reproduction of informative messages of commercial kind, which are continuously updated so as to maintain strong the curiosity and the attention of the calling user who is waiting. A further object of the invention is to provide a system for a phonic advertising service on telephone terminals, which utilizes the waiting time employed for realizing the communication between the calling user and the called one, for the listening of advertising messages, and which allows the economical recovery of the telephone costs not properly due to a conversation, by creating incomes from advertising, wherein this constitutes a basic principle for defending the rights of a consumer and for a different distribution of the telephone costs in general.

A last object of the present invention is to provide a system for a phonic advertising service on telephone terminals, which uses constitutive parts, frequencies and standard working protocols in the telematic field, in order to limit the cost of the device and for an easier maintenance thereof.

These and further objects which will be clear in the course of the description, are attained through a device and system for managing the phonic advertising on telephone terminals, which is characterized in that it comprises - for the direct reception of an arriving telephone call - at least a public or private telephone exchange, communicating via telephone cables, and/or coaxial cables, and/or optical fibres, and/or radio links or satellite connections, including the server telephone exchanges of mobile receiver telephones, said exchanges comprising at least a device for the reproduction and the selection of messages for advertising of commercial products, forming an independent unit and complementary to the telephone exchange, the device being operated on the line concerned by this telephone call, said line being dependent on a telephone service which is completely free of charges for the calling user or else the charges being predetermined and shared between the calling and the called user; said device for the reproduction and selection of advertising messages performing also their synchronization.

According to an alternative configuration, said device and system for a phonic advertising service on telephone terminals, provides for a device for the reproduction and selection of advertising messages of a commercial kind, which is formed by an independent unit, complementary to the telephone exchange, which is activated on the line concerned by said telephone call, at the very instant the telephone exchange puts the line itself in the waiting mode; said device for the reproduction and the selection of advertising messages provides, in this case also, for their synchronization.

The synchronization in the reproduction of the advertising message, is performed according to different protocol characteristics, according to specific requirements; it may be decided that a commercial message be reproduced entirely, from the beginning to the end, in such a way that the user who is waiting will be able to completely know the content of the message, including the possibility, for instance, of hearing it from the beginning and of hearing the reference telephone number associated with said message, which is communicated at the end of the message itself (in practice, the dedicated program disables the called user from answering and therefore from interrupting the text of the message, until the latter is terminated). In this case, as will be better described later on, memory devices with a direct access/random memory read and with the related programming, will be very useful, allowing the selection of the message in times independent of the message location in the memory support.

Alternatively, in a case less complex than the preceding one, the transmission of the messages may occur sequentially and cyclically, so that after a predetermined time the same message is repeated; in such a case there must be provided a sequential access memory, wherein messages are read sequentially, one after the other. It is also possible to consider messages with different priorities, which means that the same advertising messages are repeated more frequently than other ones, according to the programming performed.

The device for the selection and the reproduction of messages according to the technique of the present invention, is provided with a command for the arrangement in a particular environment (that is, by the company or board where it has been installed), and with one which is both remote and automatic and which is sent by the telephone exchange and is activated by the presence of at least a line in the waiting mode.

Every advertising message begins with a short tone (1 KHz - 70 msec) in order to distinguish in an unequivocal way the various messages from each other. The resumption of a line by the operator is anticipated by an announcement signal; the user who is waiting, in this manner, perceives a variation in the communication condition and is ready to answer.

It is not to be excluded that, in view of the novelty of this service, the signal for calling the user's attention, sent between the pause and the engagement of the line, and which is used by the operator, will give rise to the introduction of a standard related to this type of services. Concerning the management of the service itself, the advertising messages will be inserted on an adequate memory support, which will be examined in detail in the following. If the advertising messages are sent cyclically and sequentially, it is obvious that the repetition of the same message is the more frequent the lesser the number of messages introduced on the same storage medium.

The device for the selection and reproduction of commercial advertising messages recorded on a storage medium is also provided with an additional device which sends, on the telephone line, commercial advertising messages, in a random and interactive way; for instance in such a way as to allow to hear again a particular message as a consequence of a request by the calling user, who dials the related keys for that request.

The device for the selection and reproduction of commercial advertising messages recorded on a storage medium, may also be realized in such a way as to send an advertising message to a calling user also immediately after the first standard warning signal (that is after the first telephone ring), until the operator answers, wherein said message is anticipated by a warning that the operator will very soon help the user.

Every storage medium (memory support) contains a predetermined number of messages, and, if it is provided to a private telephone exchange, will provide advertising information to a set of customers, said information comprising this specific user, the knowledge of its products and the availability of the latter from local dealers. The storage media may accordingly be subdivided according to messages with a local, provincial, regional, national or international character, depending on the telephone user being called, and if they are classified by an intelligent code, they can be associated to a precise edition of messages, a certain language, etc. Therefore, storage media with equal codes contain the same messages, whereas if said codes are different, different advertising messages are contained.

The storage media may be distributed and/or substituted in the different zones of the same area according to the classification of their own code. Each storage medium may be modified, deleted, renewed, and utilized with the same or a new code. The code is changed for any variation performed on at least one message, whose content, for instance, had to be changed, or for administrative reasons like the non-payment of the advertising fee. An appropriate use of the codes allows a noticeable planning and supervision of the commercial activity. Moreover, the code managing system may include the generation, the issue, the distribution, the duplication, the filing etc. in the different advertising contracts.

Only for illustrative purposes and without limiting in this way the generality and possible applications, in the following preferred embodiments of the apparatus according to the invention will be described.

A voice synthesis (such as a voice mail) professional static apparatus for the reproduction and selection of messages comprises a motherboard circuit with a microprocessor, a fixed program storage circuit and a volatile memory circuit, a floppy disk driver with the related controller, a digital to analog conversion circuit, an amplifier with level regulator and a telephone adapter, and a multimedia card of the sound blaster kind. In operation, the coded floppy disk is introduced into the driver and in presence of the inserted floppy disk the content of the latter is loaded in the RAM, according to the bulk-resident program.

After the recognition of the program, the digital-to-analog conversion from the respective circuit is immediately started according to the instructions of the resident program and the analog signal is amplified and sent at the output to the telephone connection. An internal clock allows to load the content of the disk periodically, in order to "refresh" the data of the messages, in case of a partial or total data loss due to occasional disturbances. Therefore, the floppy disk is used only every now and then in an automatic way.

By inserting a floppy disk with a different code, the latter is automatically loaded; as the resident program realizes that the floppy disk is absent and/or has been replaced, in case of its absence it does not send any more the content of the memory to the output, unless a specific disk extraction code has been introduced.

The telephone adapter should also be provided with an automatic switching circuit for the signals "conventional-advertising messages" allowing to maintain the original service unaltered in case of failure of the message reproduction and selection apparatus.

A connection adapter on the central circuit is provided in case of removal of the apparatus after stealing, repair or overhaul.

A message counter allows periodic quantitative evaluation of the single advertising messages.

In another embodiment, an apparatus for the reproduction and selection of messages according to the present invention, comprises a tape-type reproduction device, a level regulator and a telephone adapter.

When the coded tape is introduced for loading in the reproduction device, the message sending is started immediately thereafter according to the instructions of the recorded program; the analog signal is amplified and sent to the output towards the telephonic connection. It is provided that the telephone adapter comprises also an automatic switching circuit for the signals "conventional-advertising messages" which allows to maintain unaltered the original service in case of failure of the message reproduction and selection device.

A message counter allows periodic quantitative evaluation of individual advertising messages.

According to a further embodiment of a reproduction and selection apparatus according to the system of the present invention, the apparatus is provided with an optical disk reproduction device, and when the coded disk is introduced into the reproduction device, the content is loaded in the memory and immediately thereafter the message sending occurs, according to the instructions of the recorded program. The analog signal is amplified and sent to the output towards the telephonic connection. Also in this embodiment it is provided that the telephone adapter includes an automatic switching circuit of the signals "conventional-advertising messages" allowing an unaltered operation of the original service in case of failure of the message selection and reproduction apparatus. In this case too, a message counter allows periodic quantitative evaluation of the individual advertising messages.

The described apparatus, performing the service according to the present invention, would be offered to companies, corporations, private companies, or public companies. Moreover, this apparatus for the management and sending of advertising messages has been designed in an universal way since it can be introduced in any telephone exchange whatever. This apparatus is a complementary means of telephone exchanges, both of public and private telephone exchanges, operating on telephone cables, or coaxial cables, optical fibres, radio links and connections via satellite, including also server exchanges of mobile receiver telephones, and it does not disturb in any way the existing network and the already implemented telephone services, allowing a noticeable saving of money for the companies or corporations and at last also for the final user; the incremented value of said apparatus and of the related management method, when it is included in the telephone service, may be evaluated concretely by measuring (e.g. by means of a simple metering pulse counter) the time spent for the reproduction of the single advertising messages, during which the lines are waiting for an answer. Obviously, also other kinds of messages, like news-bulletins, specific announcements, etc., may be transmitted together with the advertising.

## Claims

1. Device and system for a phonic advertising service on telephone terminals, characterized in that it comprises, for the direct reception of an arriving telephone call, at least a public or private telephone exchange, communicating through telephone cables, and/or coaxial cables, and/or optical fibres, and/or through radio links or via satellite, including also the server telephone exchanges of mobile telephone receivers, and in that it further comprises at least a device for the reproduction and selection of advertising messages, formed by an independent and complementary unit with respect to the telephone exchange, operated in any case on the telephone line concerned by the telephone call, wherein said line is devoted to a completely free telephone service for the calling user or to a sharing of the fees between the calling and the called user, said device for the reproduction and selection of advertising messages realizing also their synchronization.

2. Device and system for a phonic advertising service on telephone terminals according to claim 1, characterized in that it comprises at least a device for the reproduction and selection of advertising messages, formed by an independent unit and complementary to said telephone exchange, activated on the line concerned by the telephone call at the time the telephone exchange puts the line in the waiting mode, wherein said device for the selection and reproduction of the advertising messages realizes their synchronization.

3. Device and system for a phonic advertising service on telephone terminals according to claims 1 and 2, characterized in that the synchronization of the different messages occurs in a manner such that each advertising message is reproduced entirely from the beginning to the end, so that the waiting user will be completely informed about its content.

4. Device and system for a phonic advertising service on telephone terminals according to claims 1, 2, 3, characterized in that the synchronization of the different messages is performed so that the transmission of the messages occurs sequentially and cyclically, in such a way that after a predetermined time interval the same message is repeated.

5. Device and system for a phonic advertising service on telephone terminals according to claims 1, 2, 3, characterized in that the synchronization of the different messages is performed in such a way that the advertising messages are reproduced with different frequencies according to a definite priority.

6. Device and system for a phonic advertising service on telephone terminals according to any of the preceding claims, characterized in that the device for the selection and reproduction of advertising messages recorded on a storage medium is associated to a further device for the random and interactive transmission of advertising messages on the line.

7. Device and system for a phonic advertising service on telephone terminals according to the preceding claims, characterized in that the advertising messages are associated to announcements or interposed between announcements not serving for sale promotion, for instance news-bulletins or specific information.

8. Device and system for a phonic advertising service on telephone terminals according to any of the preceding claims, characterized in that an advertising message is sent to the calling user after the first standardized warning telephone ring, till the operator's answer, wherein said message is anticipated by a notice that the operator will immediately come to the user's assistance.

9. Device and system for a phonic advertising service on telephone terminals according to any of the preceding claims, characterized in that a storage medium for a set of advertising messages is identified and classified by an intelligent code associated thereto in a biunivocal way.

10. Device and system for a phonic advertising service on telephone terminals according to any of the preceding claims, characterized in that the storage medium identification code is changed each time the content of at least one of the stored advertising messages is changed.

11. Device and system for a phonic advertising service on telephone terminals according to any of the preceding claims, characterized in that the identification code of the set of advertising messages recorded on each storage medium, is used for the book-keeping/administrative management of the advertising contracts.
